# FASCICULE DE BREVET EUROPEEN

(11) **EP 3 259 076 B1**
(45) Date de publication et mention de la délivrance du brevet: **12.12.2018**
(21) Numéro de dépôt: 16706816.2
(22) Date de dépôt: 16.02.2016
(51) Int. Cl.: B05B 12/12, B05B 12/04, B05B 13/04, G05B 19/19, B05B 16/00, G06F 8/61

(54) **MÉTHODE D'APPLICATION D'UN PRODUIT DE REVÊTEMENT SUR UNE PIÈCE DÉPLACÉE PAR UN CONVOYEUR ET INSTALLATION D'APPLICATION D'UN PRODUIT DE REVÊTEMENT**
AUFTRAGSVERFAHREN EINES BESCHICHTUNGSMATERIALS AUF EIN DURCH EINE FÖRDERVORRICHTUNG BEWEGTES WERKSTÜCK SOWIE VORRICHTUNG ZUM AUFTRAGEN EINES BESCHICHTUNGSMATERIALS
METHOD FOR APPLYING A COATING MATERIAL ON A WORKPIECE MOVED BY A CONVEYOR AND INSTALLATION FOR APPLYING A COATING MATERIAL

(30) Priorité: 17.02.2015 FR 1551330
(43) Date de publication de la demande: 27.12.2017
(73) Titulaire: Exel Industries, 51200 Epernay (FR)
(72) Inventeur: LE STRAT, Cédric, 38170 Seyssinet Pariset (FR); PROVENAZ, Philippe, 38240 Meylan (FR); PRUS, Eric, 38100 Grenoble (FR); BROCHIER-CENDRE, Hervé, 38190 Froges (FR)
(74) Mandataire: Lavoix
(86) Numéro de dépôt international: PCT/EP2016/053227
(87) Numéro de publication internationale: WO 2016/131805

(56) Documents cités:
- EP-A1- 0 529 851
- EP-A1- 0 970 811
- EP-A1- 2 712 680
- EP-A2- 0 706 102
- WO-A1-02/00449
- WO-A1-2013/175392
- FR-A1- 2 855 081
- IT-A1- MI20 091 474
- US-A- 3 777 702

## Description

La présente invention concerne une méthode d'application d'un produit de revêtement sur une pièce déplacée par un convoyeur et une installation d'application d'un produit de revêtement avec laquelle cette méthode peut être implémentée.

De manière connue, EP-A-0 706 102 divulgue une installation de pulvérisation d'un produit de revêtement comprenant un convoyeur sur lequel sont suspendues une ou plusieurs pièces à pulvériser et des pulvérisateurs qui sont disposés le long du convoyeur. L'installation comprend également un système de détection des pièces dans le champ d'application des pulvérisateurs. Les pulvérisateurs sont commandés automatiquement pour projeter le produit de revêtement uniquement si la présence d'une pièce est détectée dans leur champ d'application. Cette installation a pour inconvénient que la distance d'application des pulvérisateurs n'est pas ajustée en fonction du gabarit des pièces convoyées.

FR-A-2 855 081 traite ce problème technique et divulgue une installation comprenant une première colonne de pulvérisation imprécise, qui ne prend pas en compte la géométrie de la pièce. Cette première colonne est pourvue d'un robot réciprocateur ayant plusieurs pulvérisateurs mobiles verticalement en bloc. Cette première colonne ne permettant pas d'appliquer une épaisseur de peinture ou de poudre homogène sur l'ensemble de la pièce, l'installation comprend également une deuxième colonne, dite de retouche ou de pré-touche, suivant que celle-ci est disposée respectivement en aval ou en amont de la première colonne. Cette deuxième colonne a pour fonction d'appliquer le produit sur des zones difficiles de la pièce afin d'améliorer la qualité de finition. Elle est équipée de plusieurs chariots supportant des pistolets d'application de peinture. Ces chariots sont mobiles indépendamment les uns des autres selon une direction verticale et selon une direction horizontale perpendiculaire à un axe de déplacement du convoyeur. Une ouverture oblongue s'étendant dans le sens de la hauteur est pratiquée dans la cabine pour le passage des pistolets. Les pièces qui entrent dans la cabine ont chacune un profil prédéterminé, qui est enregistré dans une table et conservé en mémoire dans une unité de commande. En particulier, la longueur, la largeur et la profondeur de la pièce, c'est-à-dire l'ensemble de côtes dimensionnelles de chaque pièce, sont connues. Les pistolets de la deuxième colonne sont alors positionnés en fonction des côtes préenregistrées pour obtenir une distance d'application correcte dans leur champ d'application respectif.

Par ailleurs, EP-A-2 712 680 divulgue une méthode d'application d'un produit de revêtement comprenant au préalable une étape de détection des côtes dimensionnelles d'une pièce à revêtir. Comme explicité au paragraphe [0052], cette méthode est mise en oeuvre sur des pièces dont le profil est préenregistré dans une table. Dans l'exemple des figures, ces pièces sont choisies globalement rectangulaires et peuvent comporter un ou plusieurs évidements du côté avant et/ou du côté arrière. La largeur d'une pièce à revêtir est déterminée par un codeur incrémental. La profondeur et la largeur du ou des éventuels évidements pratiqués dans la pièce sont déterminées au moyen d'un dispositif de balayage optique, formé par deux capteurs disposés de part et d'autre de la pièce. Chaque pièce est classée dans la table en fonction de ses côtes dimensionnelles. Par exemple si sa largeur est comprise entre 0 et 25% d'une valeur nominale, la pièce sera classée dans une certaine catégorie. En fonction de son classement dans la table, des paramètres spécifiques sont affectés aux pulvérisateurs disposés le long du convoyeur. En particulier, ces paramètres incluent, entre autres, la distance d'application, c'est-à-dire la distance entre la surface à peindre et le pulvérisateur.

Les deux méthodes de FR-A-2 855081 et EP-A-2 712680 ne prennent pas en compte les éventuels défauts liés à l'accrochage des pièces sur le convoyeur. En outre, elles ne s'appliquent qu'aux pièces dont le profil est préenregistré en mémoire, c'est-à-dire qu'elles ne s'appliquent pas aux pièces de forme gauche quelconque.

C'est à ces inconvénients qu'entend plus particulièrement remédier l'invention en proposant une méthode d'application d'un produit de revêtement qui permet d'ajuster automatiquement et indépendamment la distance d'application de chaque pulvérisateur, pour s'adapter aux pièces de forme gauche ou aux pièces mal accrochées, et ceci au fur et à mesure que la pièce avance le long du convoyeur. Il en résulte ainsi une distance d'application correcte et une bonne qualité de finition.

A cet effet, l'invention concerne une méthode d'application d'un produit de revêtement sur une pièce déplacée par un convoyeur, le long duquel est disposé au moins un pulvérisateur mobile dans un plan oblique ou perpendiculaire à un axe de déplacement du convoyeur. Cette méthode comprend les étapes automatisées suivantes, consistant à :
a) déterminer dans un repère fixe, les coordonnées des points d'une ou plusieurs lignes de profil extérieur de la pièce réparties sur la longueur de la pièce,
b) attribuer à chaque pulvérisateur les points de chaque ligne de profil extérieur qui se trouvent dans son champ de pulvérisation,
c) parmi les points attribués à chaque pulvérisateur, identifier pour chaque ligne de profil extérieur le point le plus proche du pulvérisateur,
d) déterminer pour chaque pulvérisateur, une ligne de suivi passant par la projection orthogonale de tous les points les plus proches identifiés à l'étape c) dans un plan passant par un axe du pulvérisateur et parallèle à l'axe de déplacement du convoyeur), et à
e) établir une trajectoire de consigne pour chaque pulvérisateur en fonction des points de la ligne de suivi de manière à ajuster automatiquement et indépendamment la distance d'application de chaque pulvérisateur en fonction du profil extérieur de la pièce.

Grâce à l'invention, une trajectoire de consigne est établie pour chaque pulvérisateur en fonction du gabarit de la pièce convoyée. Le gabarit de la pièce convoyée est déterminé en calculant, dans un repère fixe, les coordonnées des points de plusieurs lignes de profil extérieur de la pièce à revêtir réparties sur la longueur de la pièce. Chaque ligne de profil extérieur est segmentée en plusieurs tronçons, chacun correspondant aux points de la ligne de profil extérieur qui appartiennent au champ d'application d'un pulvérisateur. Après avoir identifié le point de chaque tronçon qui est le plus proche du pulvérisateur, il est possible d'établir une ligne de suivi passant par les points plus proches du pulvérisateur, sur la base de laquelle une trajectoire de consigne est affectée au pulvérisateur correspondant. Cette méthode prend donc en compte les pièces ayant une forme gauche ou qui sont mal accrochées au convoyeur.

Selon des aspects avantageux mais non obligatoire de l'invention, une telle méthode d'application d'un produit de revêtement peut incorporer une ou plusieurs des caractéristiques suivantes, prises dans toute combinaison techniquement admissible :
- La méthode comprend une autre étape consistant à mesurer la position de chaque pièce le long du convoyeur, alors que l'étape a) consiste à déterminer les coordonnées des points de plusieurs lignes de profil extérieur réparties à intervalle régulier sur la longueur de la pièce.
- La méthode comprend une autre étape consistant à piloter chaque pulvérisateur pour projeter le produit de revêtement uniquement si la pièce se trouve dans son champ de pulvérisation.
- Chaque ligne de suivi est prolongée numériquement de part et d'autre par des points de mesure fictifs pour projeter du produit sur les faces avant et arrière de la pièce.
- Les points de mesure fictifs sont positionnés sur l'axe du convoyeur si la face avant ou arrière est intersectée par l'axe du convoyeur et sont positionnées axialement dans le prolongement du premier ou du dernier point de la ligne de suivi si la face avant ou arrière n'est pas intersectée par l'axe du convoyeur.
- Les points de mesure fictifs sont répartis sur un segment parallèle à l'axe du convoyeur, dont la longueur est égale à la largeur du champ de pulvérisation du pulvérisateur.
- L'étape e) comprend des sous-étapes consistant à :
   f) affecter une courbe de déplacement en forme de demi-ellipse à chaque point des lignes de suivi, la distance nominale d'application du pulvérisateur correspondant pour moitié au grand axe de la courbe de déplacement,
   g) déterminer la trajectoire de consigne en établissant une ligne d'enveloppe du nuage de points formé par les points de chaque courbe de déplacement affectée à l'étape f).
- La méthode comprend une autre étape consistant à vérifier si chaque pulvérisateur est capable de suivre sa trajectoire, et s'il n'en est pas capable, à établir une nouvelle trajectoire, qui suit au mieux la trajectoire de consigne ou à reculer au maximum le pulvérisateur pour éviter une collision entre la pièce à revêtir et le pulvérisateur.
- Au moins un des pulvérisateurs est apte à effectuer un mouvement combiné vertical et horizontal dans son plan de mobilité, alors que le point le plus proche du pulvérisateur dans son champ d'application est actualisé au cours du déplacement vertical du pulvérisateur et que la distance d'application du pulvérisateur est ajustée automatiquement en fonction des coordonnées du point le plus proche.
- Une étape de calcul de la trajectoire des pulvérisateurs aptes à effectuer un mouvement combiné comprend des sous-étapes consistant à :
   m) prolonger numériquement une surface de profil extérieur, formée par l'ensemble des lignes de profil extérieur, par des points de mesure fictifs de part et d'autre dans le sens de la longueur,
   n) affecter une courbe de déplacement en forme de demi-ellipse à chaque point de mesure réel appartenant aux lignes de profil extérieur et à chaque point de mesure fictif, la distance nominale d'application du pulvérisateur correspondant pour moitié au grand axe de la courbe de déplacement,
   p) déterminer une surface d'enveloppe du nuage de points formé par les points de chaque courbe de déplacement affectée à l'étape n), et
   q) établir une trajectoire de consigne à l'intérieur de cette surface d'enveloppe.
- A l'étape a), chaque ligne de profil extérieur est formée par des segments de droite reliant différents points de mesure réels et en ce que, à l'étape b), une ou plusieurs lignes de profil extérieur sont complétées par un ou deux points de mesure artificiels à l'intersection entre les segments de droite et les limites inférieure et/ou supérieure du champ de pulvérisation de chaque pulvérisateur.

L'invention concerne également une installation d'application d'un produit de revêtement sur une pièce déplacée par un convoyeur, le long duquel est disposé au moins un pulvérisateur, mobile dans un plan oblique ou perpendiculaire à un axe de déplacement du convoyeur. Cette installation comprend les moyens suivants :
- un premier moyen pour déterminer dans un repère fixe, les coordonnées des points d'une ou plusieurs lignes de profil extérieur de la pièce, réparties sur la longueur de la pièce,
- un deuxième moyen pour attribuer à chaque pulvérisateur, les points de chaque ligne de profil extérieur qui se trouvent dans son champ de pulvérisation,
- un troisième moyen pour identifier, pour chaque ligne de profil extérieur et parmi les points attribués à chaque pulvérisateur, le point le plus proche du pulvérisateur,
- un quatrième moyen pour déterminer pour chaque pulvérisateur, une ligne de suivi passant par la projection orthogonale de tous les points les plus proches dans un plan passant par un axe du pulvérisateur et parallèle à l'axe de déplacement du convoyeur, et
- un cinquième moyen pour établir une trajectoire de consigne pour chaque pulvérisateur en fonction des points de la ligne de suivi de manière à ajuster automatiquement et indépendamment la distance d'application de chaque pulvérisateur en fonction du profil extérieur de la pièce.

Selon des aspects avantageux mais non obligatoires de l'invention, une installation d'application d'un produit de revêtement selon l'invention peut incorporer une ou plusieurs des caractéristiques suivantes, prises dans toute combinaison techniquement admissible :
- L'installation comprend une colonne de pulvérisateurs, disposée d'un côté du convoyeur.
- Le premier moyen inclut un capteur, disposé d'un côté du convoyeur, en amont du ou des pulvérisateurs.
- L'installation comprend au moins deux colonnes de pulvérisateurs, qui sont disposées de part et d'autre du convoyeur, ces colonnes étant de préférence disposées par paires, alors que les colonnes de pulvérisateurs de chaque paire sont disposées côte-à-côte.
- Le premier moyen inclut deux capteurs, qui sont disposés de part et d'autre du convoyeur, en amont du ou des pulvérisateurs et qui ont chacun un plan de mesure vertical.
- Les capteurs sont décalés l'un par rapport à l'autre le long de l'axe de déplacement du convoyeur.
- Les capteurs sont des radars laser, générant un rayon laser balayant la hauteur de la pièce.
- Deux miroirs sont disposés au-dessus et en dessous de chaque capteur, ces miroirs étant orientés pour réfléchir les rayons laser du capteur afin d'atteindre des zones d'ombre d'une pièce à revêtir.

L'invention et d'autres avantages de celle-ci apparaitront plus clairement à la lumière de la description qui va suivre de deux modes de réalisation d'une méthode d'application d'un produit de revêtement conforme à son principe, donnée uniquement à titre d'exemple et faite en référence aux dessins annexés dans lesquels :
- la figure 1 est une vue de dessus d'une installation d'application d'un produit de revêtement conforme à l'invention,
- la figure 2 est une vue en perspective d'une pièce déplacée par un convoyeur appartenant à l'installation de la figure 1,
- la figure 3 est une vue de face de l'entrée d'une cabine appartenant à l'installation de la figure 1, dans le sens de la flèche III à la figure 1,
- les figures 4 à 6 sont des schémas illustrant, en vue de dessus, différentes configurations d'accrochage d'une pièce sur un convoyeur,
- la figure 7 représente le trajet d'un pulvérisateur de l'installation de la figure 1, le long de son axe de pulvérisation, par rapport à un point de mesure appartenant à une pièce,
- la figure 8 représente le trajet d'un pulvérisateur de l'installation de la figure 1 le long de son axe de pulvérisation par rapport à un ensemble de points de mesures appartenant à une pièce,
- la figure 9 est un schéma représentant une modification de la trajectoire d'un pulvérisateur de l'installation de la figure 1 pour anticiper une collision avec une pièce à revêtir,
- la figure 10 est un schéma représentant le traitement des zones d'ombres dans la détection de gabarit d'une pièce, et
- la figure 11 représente un deuxième mode de réalisation d'une installation d'application d'un produit de revêtement, dans laquelle deux miroirs sont disposés, respectivement au-dessus et en dessous de chaque capteur laser appartenant à l'installation.

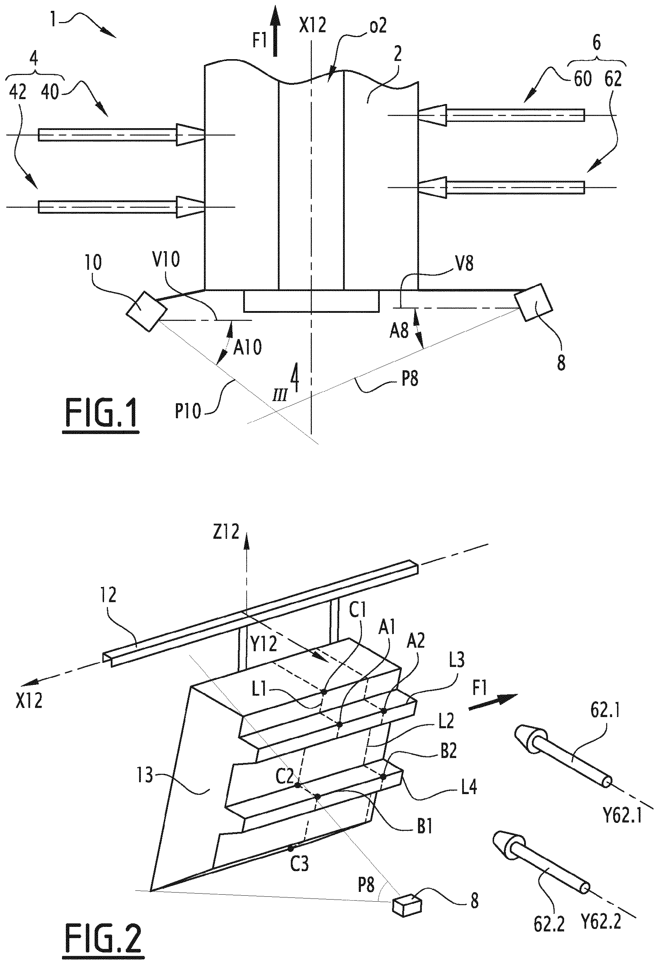

Sur la figure 1 est représentée une installation 1 d'application d'un produit de revêtement. L'installation 1 est configurée pour appliquer le produit sur des pièces déplacées par un convoyeur 12. Comme visible à la figure 2, le convoyeur 12 est un convoyeur aérien sur lequel sont suspendues une ou plusieurs pièces 13 à revêtir. X12 désigne un axe de déplacement du convoyeur 12 et F1 désigne le sens de déplacement du convoyeur 12.

Dans la suite de la description, une direction longitudinale, c'est-à-dire allant dans le sens de la longueur d'une pièce, est parallèle à l'axe X12.

L'installation 1 comprend une cabine 2 délimitant en partie supérieure une ouverture longitudinale o2 pour le passage du convoyeur 12. La cabine 2 est pourvue de plusieurs ouvertures latérales non-représentées pour le passage de pulvérisateurs.

Dans le présent document, le terme « pulvérisateur » doit être interprété au sens large. En effet, dans l'exemple des figures, les pulvérisateurs sont des pulvérisateurs de peinture liquide, mais l'invention s'applique également, entre autres, aux projecteurs de poudre. Ainsi, le produit de revêtement peut être de la peinture, un vernis ou encore un apprêt, sous forme de liquide ou de poudre.

Dans l'exemple, deux paires 4 et 6 de rangées verticales de pulvérisateurs sont disposées de chaque côté de la cabine 2. Les pulvérisateurs disposés du côté de la paire 4 sont des pulvérisateurs « gauches », alors que les pulvérisateurs disposés à l'opposé, du côté de la paire 6, sont des pulvérisateurs « droits ».

La paire 4 comprend deux colonnes 40 et 42 de pulvérisateurs, chaque colonne comprenant huit pulvérisateurs répartis de manière régulière dans le sens de la hauteur. De même, la paire opposée 6 comprend deux colonnes verticales de pulvérisateurs 60 et 62, chaque rangée comprenant huit pulvérisateurs répartis en hauteur avec un intervalle régulier. Les deux colonnes, de pulvérisateurs 40 et 42, ainsi que les deux colonnes, 60 et 62, sont disposées côte-à-côte. Les huit pulvérisateurs de la colonne 42 sont numérotés 42.1 à 42.8 en allant du pulvérisateur le plus haut au pulvérisateur le plus bas. De même, les huit pulvérisateurs de la colonne opposée 62 sont numérotés 62.1 à 62.8 en allant du pulvérisateur le plus haut au pulvérisateur le plus bas.

Les pulvérisateurs des colonnes 40 et 42 ainsi que les pulvérisateurs des colonnes 60 et 62 ne sont pas disposés en vis-à-vis dans un même plan horizontal de manière à éviter au maximum les interférences lors de la pulvérisation. Ceci est notamment important lorsque le produit de revêtement est chargé électrostatiquement.

Chaque pulvérisateur définit un axe de pulvérisation selon lequel le produit est projeté. Dans l'exemple des figures, l'axe de pulvérisation de chaque pulvérisateur est horizontal et perpendiculaire à l'axe de déplacement X12 du convoyeur 12. Sur la figure 2, les axes de pulvérisation des pulvérisateurs 62.1 et 62.2 sont référencés Y62.1 et Y62.2. Plus généralement, Y62.i désigne l'axe de pulvérisation d'un pulvérisateur 62.i, avec i compris entre 1 et 8.

Chaque pulvérisateur est mobile dans un plan perpendiculaire à l'axe de déplacement X12 du convoyeur 12, notamment le long de son axe. En effet, chaque pulvérisateur est monté sur un chariot mobile non représenté, qui est apte à coulisser dans un rail également non-représenté. Le chariot peut par exemple être mis en translation par un moteur électrique. Chaque chariot mobile est commandé en déplacement par une unité électronique de commande non représentée.

Deux capteurs 8 et 10 sont disposés en amont et à l'extérieur de la cabine de pulvérisation 2. Ces deux capteurs 8 et 10 sont disposés de chaque côté du convoyeur 12, respectivement à droite et à gauche, et sont prévus pour mesurer le gabarit des pièces entrant dans la cabine 2. Les capteurs 8 et 10 sont des capteurs lasers, dénommés « radar laser », « scanner laser », ou encore « lidar ». Ils fonctionnent par balayage, c'est-à-dire qu'ils génèrent un faisceau laser qui se déplace dans un plan vertical, respectivement référencé P8 ou P10, sur un angle d'environ 270°. Ces capteurs laser permettent de mesurer la distance entre un point d'un l'objet visé par le faisceau laser et le capteur. Ainsi, ces capteurs permettent de déterminer les coordonnées, dans un repère fixe, d'une série de points appartenant à l'intersection entre le plan du capteur et une pièce 13 à revêtir. Cette série de points forme une ligne de profil extérieur de la pièce 13. Cette ligne de profil extérieur est alors contenue dans un plan vertical. Comme la pièce 13 se déplace le long de l'axe X12 du convoyeur 12, chaque capteur mesure en pratique plusieurs lignes de profil extérieur, qui sont réparties sur la longueur de la pièce avec un intervalle régulier. Cet intervalle dépend de la vitesse du convoyeur 12, de la fréquence de balayage du capteur 8 ou 10 et de l'angle d'inclinaison du plan de mesure du capteur par rapport à un plan vertical perpendiculaire à l'axe X12.

Dans l'exemple, les plans P8 et P10 sont respectivement inclinés d'un angle A8 et A10 par rapport à un plan vertical V8 ou V10 perpendiculaire à l'axe de déplacement X12 du convoyeur 12. En règle générale, un capteur mesure une épaisseur de paroi d'autant plus fine que son plan de mesure est incliné par rapport à un plan perpendiculaire à l'axe X12 d'un angle important.

Les capteurs 8 et 10 sont décalés l'un par rapport à l'autre le long de l'axe X12 pour être capable de déduire la vitesse du convoyeur 12. La vitesse du convoyeur 12 peut aussi être mesurée directement par un capteur approprié, non représenté sur les figures.

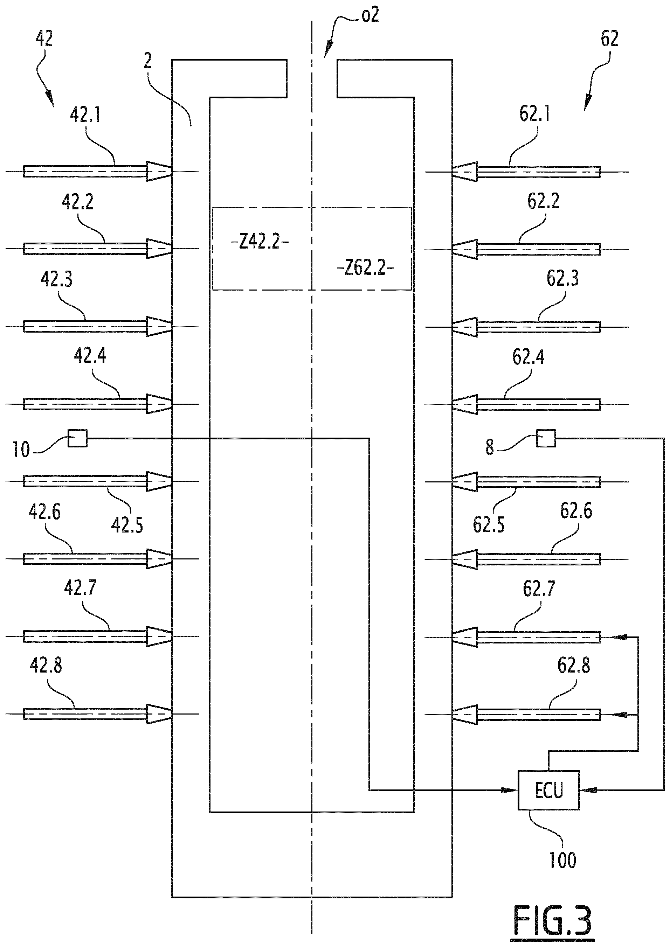

Comme visible à la figure 3, les capteurs 8 et 10 sont positionnés à mi-hauteur par rapport à la hauteur de la cabine 2 pour minimiser les zones d'ombre, c'est-à-dire les zones qui sont inaccessibles pour le faisceau laser du capteur du fait de la géométrie de la pièce. Ces zones d'ombre sont en fait des zones masquées par la pièce elle-même.

L'installation 1 comprend également une unité électronique de commande (ECU) 100, qui est schématiquement représentée à la figure 3. L'ECU 100 est configurée pour recevoir des signaux de mesure provenant des capteurs 8 et 10. Ces signaux incluent notamment les coordonnées des points de chaque ligne de profil extérieur dans le repère fixe. Pour la clarté du dessin, l'ECU 100 n'est reliée qu'à deux pulvérisateurs à la figure 3, respectivement 62.7 et 62.8. Cependant, l'ECU 100 pilote chaque pulvérisateur des colonnes de pulvérisations 40, 42, 60 et 62, c'est-à-dire qu'elle est apte à envoyer des signaux de consigne à chaque pulvérisateur. Ces signaux de consigne correspondent à des valeurs de déplacement à effectuer pour chaque pulvérisateur pour atteindre une certaine position le long de son axe.

Par ailleurs, chaque pulvérisateur comporte un champ d'application, ou un champ d'application, qui correspond à une zone dans laquelle il est capable de projeter du produit de revêtement. Cette zone correspond globalement à un volume parallélépipédique. Sur la figure 3 sont représentés les champs d'application Z42.2 et Z62.2, respectivement des pulvérisateurs 42.2 et 62.2. Les pulvérisateurs des colonnes 42 et 62 sont disposés les uns en face des autres. Ainsi, les zones Z42.2 et Z62.2 sont confondues.

On décrit ci-dessous une méthode d'application d'un produit de revêtement au moyen de l'installation de pulvérisation 1. Cette méthode comprend plusieurs étapes automatisées, parmi lesquelles une première étape consistant à évaluer le gabarit de chaque pièce 13 entrant dans la cabine 2. Pour ce faire, les capteurs 8 et 10 déterminent une ou plusieurs lignes de profil extérieur de chaque côté de la pièce, c'est-à-dire à gauche et à droite du convoyeur 12. On obtient ainsi un contour extérieur complet de la pièce. Lorsque la pièce avance le long de l'axe X12 du convoyeur 12, le contour extérieur de la pièce, qui est mesuré par les capteurs 8 et 10, peut varier. Cette variation de gabarit est détectable par les capteurs 8 et 10 car chacun de ces derniers mesurent les coordonnées des points de la ligne de profil extérieur qui est contenue dans son plan de mesure, P8 ou P10, et ceci à chaque instant. Cette première étape consiste donc à déterminer les coordonnées, dans un repère fixe, des points d'une ou plusieurs lignes de profil extérieur réparties à intervalle régulier sur la longueur de la pièce 13. Le nombre de lignes de profil extérieur dépend de la fréquence du capteur 8 ou 10, de la vitesse d'avancée du convoyeur 12 et de la longueur de la pièce. Ici, le repère fixe est un repère cartésien formé par l'axe de déplacement du convoyeur X12, un axe horizontal Y12 qui lui est perpendiculaire et un axe vertical Z12.

Dans l'exemple représenté à la figure 2, la pièce convoyée 13 est une benne de camion. Cette benne de camion 13 est mal accrochée sur le convoyeur 12, de sorte qu'elle est penchée d'environ 10° par rapport à un plan vertical. Précisément, les deux méthodes décrites dans FR-A-2 855081 et EP-A-2 712680 ne permettraient pas d'obtenir une distance d'application correcte dans cette configuration.

Sur cette figure, deux lignes de profil extérieur L1 et L2 sont représentées. La benne de camion n'est représentée que partiellement à la figure 2 pour la clarté du dessin.

Ensuite, chaque ligne de profil extérieur est divisée en plusieurs tronçons, en fonction de l'agencement des pulvérisateurs. En effet, la position des pulvérisateurs sur un axe vertical, ainsi que la largeur de leur champ d'application, ou de pulvérisation, est connue. Il est donc possible de déterminer dans le champ d'application de quel pulvérisateur se trouve chaque point d'une ligne de profil extérieur. Les points situés dans le même champ d'application sont ainsi regroupés et forment ensemble un tronçon de la ligne de profil extérieur. Chaque tronçon de la ligne de profil extérieur est donc attribué à un pulvérisateur. Cette étape d'attribution est effectuée par l'ECU 100.

Par exemple, dans le cas de la ligne de profil extérieur L1 à la figure 2, un premier tronçon délimité entre les points C1 et C2 est attribué au pulvérisateur 62.1, alors qu'un tronçon délimité entre les points C2 et C3 est attribué au pulvérisateur 62.2 disposé en dessous.

Ensuite, la méthode comprend une étape consistant à, parmi les points attribués à chaque pulvérisateur, identifier le point qui lui est le plus proche. Cette étape est réalisée en calculant la distance, parallèlement à l'axe Y12, entre chaque point attribué et le pulvérisateur. Seule la coordonnée des points de la ligne de profil selon l'axe Y12 est donc prise en compte. Cette étape de calcul est aussi réalisée par l'ECU 100.

Dans l'exemple de la figure 2, le point le plus proche du pulvérisateur 62.i, pour i compris entre 1 et 8, correspond au point ayant la coordonnée selon l'axe Y12 la plus importante. Il s'agit du point A1 pour le pulvérisateur 62.1 et du point B1 pour le pulvérisateur 62.2. La même opération est effectuée pour chaque ligne de profil extérieur de la pièce. Ainsi, le point A2 de la ligne L2 est le point le plus proche du pulvérisateur 62.1 et le point B2 de la ligne L2 est le point le plus proche du pulvérisateur 62.2.

Chaque tronçon de chaque ligne de profil extérieur comprend donc un point identifié comme étant le plus proche du pulvérisateur correspondant. Il est donc possible de déterminer, pour chaque pulvérisateur, une ligne passant par le point le plus proche de chaque ligne de profil extérieur. Dans l'exemple de la figure 2, les points les plus proches A1 et A2 ou B1 et B2 sont situés à la même altitude. Cependant, pour prendre en considération le cas où les points les plus proches sont situés à des altitudes différentes, chaque point identifié comme étant le plus proche est projeté orthogonalement dans un plan horizontal contenant l'axe du pulvérisateur concerné et parallèle à l'axe du convoyeur X12. Une ligne de suivi est affectée à chaque pulvérisateur. Cette ligne de suivi passe par la projection orthogonale du point identifié comme étant le plus proche du pulvérisateur de chaque ligne de profil extérieur. Les lignes de suivi sont donc chacune contenues dans un plan horizontal. Elles s'étendent donc dans le sens de la longueur de la pièce à revêtir, contrairement aux lignes de profil extérieur qui s'étendent dans le sens de la hauteur.

Dans le cas de la benne de camion illustrée à la figure 2, une ligne de suivi L3 passant par les points A1 et A2 est attribuée au pulvérisateur 62.1, alors qu'une ligne de suivi L4 passant par les points B1 et B2 est attribuée au pulvérisateur 62.2. Les lignes de suivi attribuées à chaque pulvérisateur permettent de programmer automatiquement une trajectoire à suivre pour chaque pulvérisateur lorsque la pièce 13 se déplace le long du convoyeur 12. La trajectoire à suivre pour chaque pulvérisateur est programmée par l'ECU 100 pour que ce dernier conserve une distance d'application correcte au fur et à mesure que la pièce 13 avance sur le convoyeur.

La ligne de suivi de chaque pulvérisateur est ensuite complétée par des points de mesure « fictifs » qui permettent de revêtir les faces d'extrémité axiale des pièces, c'est-à-dire les faces qui sont généralement perpendiculaires à l'axe du convoyeur 12. Ces points de mesure fictifs prolongent chaque ligne de suivi de part et d'autre de la pièce 13. Ce sont des points qui sont traités par les pulvérisateurs comme des points de mesure réels, alors qu'ils n'appartiennent à aucune pièce. Cependant, ces points de mesure fictifs sont considérés par les pulvérisateurs comme appartenant à la pièce. Ils sont positionnés de manière différente suivant les cas.

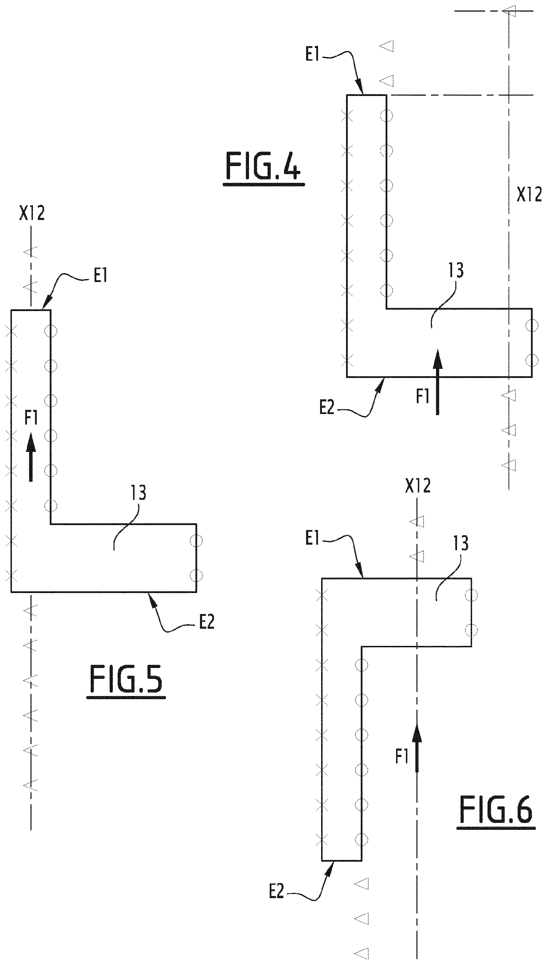

Sur les figures 4 à 6, on considère une pièce 13 accrochée au convoyeur 12, représentée en vue de dessus. De plus, sur les figures 4 à 6 et 8, les points de mesure fictifs sont représentés par des triangles, alors que les points de mesure réels mesurés par les capteurs 8 et 10 sont respectivement représentés par des ronds et par des croix. Les ronds correspondent aux points de mesure réels affectés à un pulvérisateur droit, alors que les croix correspondent aux points de mesure réels affectés à un pulvérisateur gauche.

L'avant, ou l'amont, désigne une direction allant dans le sens du convoyeur 12, c'est-à-dire dans le sens de la flèche F1, alors que l'arrière, ou l'aval, désigne une direction opposée au sens de déplacement F1 du convoyeur 12.

Dans la configuration de la figure 4, la pièce 13 est accrochée de telle sorte que sa face d'extrémité arrière E2 est intersectée par l'axe du convoyeur X12. Des points de mesure fictifs sont ajoutés en aval des points de mesure réels pour revêtir le mieux possible la face d'extrémité arrière E2. Ces points de mesure fictifs sont chacun disposés sur l'axe du convoyeur X12. Ils prolongent la ligne de suivi vers l'arrière. Des points de mesure fictifs sont également ajoutés en amont des points de mesure réels pour revêtir le mieux possible la face d'extrémité avant E1. La face d'extrémité avant E1 n'est pas intersectée par l'axe du convoyeur X12. Ainsi, les points de mesure fictifs en aval sont chacun disposés dans le prolongement axial des points de mesure réels, c'est-à-dire des ronds dans l'exemple. Dans l'exemple, seule la ligne de suivi du pulvérisateur droit est complétée par des points de mesure fictifs. Cependant, des points de mesure fictifs pourraient aussi être ajoutés à la ligne de suivi du pulvérisateur gauche.

Dans la configuration de la figure 5, la pièce 13 est accrochée de telle sorte que les faces d'extrémité E1 et E2 sont chacune intersectées par l'axe du convoyeur X12, les points de mesure fictifs qui prolongent la ligne de suivi affecté au pulvérisateur droit et/ou gauche sont donc tous disposés sur l'axe du convoyeur X12.

Dans la configuration de la figure 6, la face d'extrémité arrière E2 est excentrée par rapport à l'axe du convoyeur X12, alors que la face d'extrémité avant E1 est intersectée par l'axe du convoyeur X12. Les points de mesure fictifs ajoutés en amont de la ligne de suivi sont donc positionnés sur l'axe du convoyeur X12, alors que les points de mesure fictifs complétant la ligne de suivi en aval sont disposés dans le prolongement des points de mesure réels. Cela permet de projeter le produit de revêtement au mieux sur les faces d'extrémité E1 et E2.

Les points de mesure fictifs sont donc positionnés sur l'axe du convoyeur X12 lorsque la face avant E1 ou arrière E2 est intersectée par l'axe du convoyeur et sont positionnées axialement dans le prolongement du premier ou du dernier point de mesure réel de la ligne de suivi si la face avant E1 ou arrière E2 est désaxée par rapport à l'axe du convoyeur X12, c'est-à-dire lorsque cette face n'est pas intersectée par l'axe du convoyeur. Ces points de mesure fictifs sont répartis sur un segment parallèle à l'axe du convoyeur X12, dont la longueur est égale à la largeur du champ de d'application du pulvérisateur. Ils sont ajoutés numériquement à chaque ligne de suivi par l'ECU 100.

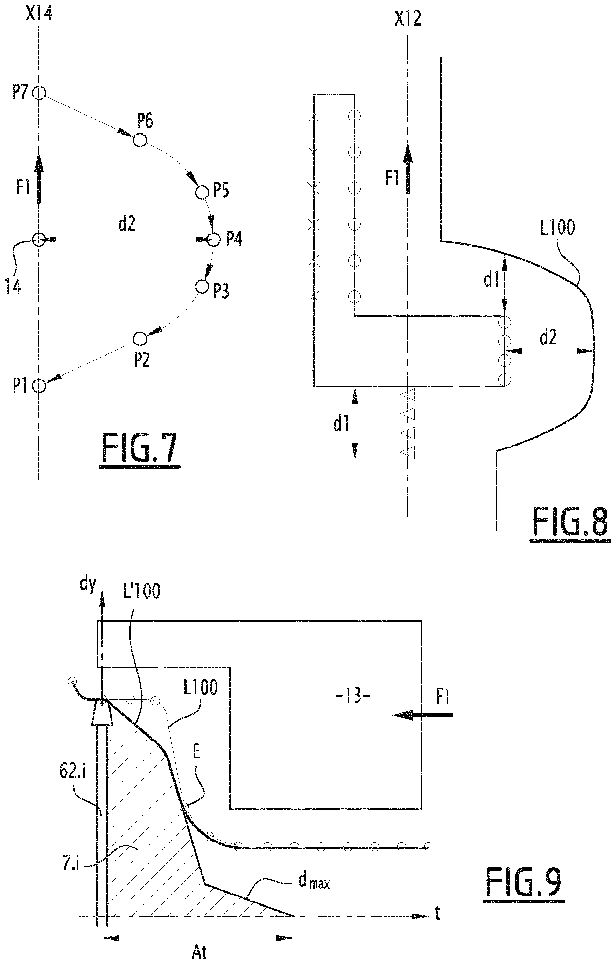

Sur la figure 7 est représenté le trajet d'un pulvérisateur vu à partir d'un référentiel mobile et en vue de dessus, notamment à partir d'un référentiel mobile lié à une pièce convoyée. Pour la clarté des explications, l'exemple choisi ici est un point de mesure 14 se déplaçant le long d'un axe X14 parallèle à l'axe du convoyeur X12. Comme visible sur cette figure, la trajectoire du pulvérisateur dans un plan horizontal est en forme de demi-ellipse et passe par des points P1 à P7, qui correspondent successivement aux positions du pulvérisateur le long de son axe pendant le déplacement du point 14. Cette demi-ellipse est centrée sur le point de mesure 14. Lorsqu'il n'y a pas de pièce dans le champ d'application du pulvérisateur, ce dernier est positionné comme si il devait projeter sur un point disposé sur l'axe du convoyeur X12. Lorsque la pièce parvient dans le champ d'application du pulvérisateur, celui-ci se recule, puis avance lorsque la pièce quitte son champ de pulvérisation, si bien qu'il décrit une trajectoire en forme de demi-ellipse. Le pulvérisateur retrouve alors la position de départ, dans laquelle il est positionné comme s'il devait projeter sur un point disposé sur l'axe du convoyeur X12. Le point P4 correspond au point où le pulvérisateur est en face du point de mesure 14. La distance d2 qui sépare le point P4 et le point 14, c'est-à-dire la moitié du grand axe de l'ellipse, correspond à la distance nominale d'application du pulvérisateur.

Des points de positionnement pour le pulvérisateur sont générés sous forme d'une demi-ellipse pour chaque point de la ligne de suivi. Autrement dit, une courbe de déplacement en forme de demi-ellipse est affectée à chaque point des lignes de suivi. Cela donne, pour chaque ligne de suivi, un nuage de points, qui n'est pas représenté à la figure 8 pour la clarté du dessin. Ce nuage de points est contenu dans un plan horizontal passant par l'axe du pulvérisateur. La trajectoire idéale du pulvérisateur pour conserver une distance d'application correcte pendant le déplacement du convoyeur sur la pièce correspond à une ligne d'enveloppe L100 de ce nuage de points. Cette ligne d'enveloppe L100 passe par le point de chaque ellipse qui est le plus éloigné de l'axe du convoyeur X12. Sur la figure 8, la distance d1 correspond à la largeur, mesurée parallèlement à l'axe X12, du champ d'application du pulvérisateur et la distance d2 correspond à la distance d'application désirée pour le pulvérisateur. La trajectoire de consigne L100 est une trajectoire idéale pour le pulvérisateur, qui est établie pour chaque pulvérisateur en fonction des points de la ligne de suivi correspondante, de manière à ajuster automatiquement et indépendamment la distance d'application de chaque pulvérisateur en fonction du profil extérieur de la pièce.

Par ailleurs, chaque pulvérisateur est piloté indépendamment pour projeter le produit de revêtement uniquement si la pièce se trouve dans son champ d'application, ou de pulvérisation. Ceci est réalisé de manière automatique par l'ECU 100 en localisant chaque pièce sur le convoyeur 12. Plus précisément, les mesures effectuées par les capteurs 8 et 10 permettent aussi de localiser chaque pièce le long de l'axe X12 du convoyeur 12. En connaissant la vitesse du convoyeur 12, il est possible de prédire précisément quand une pièce à revêtir arrivera en face de chaque pulvérisateur. L'ECU 100 est donc aussi apte à interrompre sélectivement la pulvérisation de chaque pulvérisateur. Cela permet d'éviter de projeter du produit inutilement.

La trajectoire de consigne L100 ne peut pas toujours être suivie, du fait des contraintes de recul de chaque pulvérisateur. Chaque pulvérisateur ne peut en effet pas reculer aussi vite que possible. La courbe de déplacement maximum dmax d'un pulvérisateur droit de l'installation 1 en fonction du temps t est représentée en trait fin à la figure 9, qui représente un graphique ayant pour abscisse l'échelle du temps t et pour ordonnée le déplacement dy d'un pulvérisateur le long de son axe, c'est-à-dire selon un axe parallèle à l'axe Y12. Sur ce graphique, la courbe en trait fin passant par les ronds correspond à la trajectoire établie sur la base de la ligne de suivi pour le pulvérisateur considéré, cette trajectoire, comportant des points de mesure réels et fictifs. Les points qui sont situés en dessous de la courbe dmax correspondent à des positions que le pulvérisateur ne peut pas atteindre dans le temps imparti. Une zone Zi qui est située en dessous de la courbe dmax et qui est hachurée à la figure 9 est donc une zone « inaccessible » pour le pulvérisateur.

La méthode comprend donc une étape consistant à vérifier si chaque pulvérisateur est capable de suivre sa trajectoire L100, pour éviter notamment une collision. Pour cela, la méthode prévoit de calculer le temps nécessaire à chaque pulvérisateur pour atteindre sa position de « sécurité ». Cette position de sécurité correspond à une position de retrait maximum, où le pulvérisateur se trouve à l'extérieur de la cabine 2, ou tout du moins le plus éloigné possible de l'axe du convoyeur X12. Il n'y a ainsi pas de risque de collision avec les pièces convoyées. La méthode prévoit également de calculer la distance At que parcourt la ou les pièces convoyées pendant ce temps de retrait. De cette manière, il est possible de détecter, en surveillant la ou les pièces sur la distance At qui précède chaque pulvérisateur, si une pièce arrive trop vite par rapport aux capacités de déplacement du pulvérisateur et risque d'entrer en collision avec ce dernier.

Si la géométrie de la pièce à revêtir est telle que l'enveloppe L100, c'est-à-dire la trajectoire idéale à suivre pour le pulvérisateur, passe dans la zone interdite Zi, le pulvérisateur se met en sécurité, c'est-à-dire qu'il se recule au maximum pour éviter une collision avec l'objet suspendu au convoyeur 12. En pratique, ce recul s'effectue de manière anticipée au passage de la pièce.

En revanche, si l'enveloppe L100 ne passe pas dans la zone interdite Zi, mais simplement par un ou plusieurs points de la courbe de déplacement maximum dmax, il est possible d'adapter la trajectoire du pulvérisateur pour éviter une collision, sans toutefois se mettre en sécurité et continuer à pulvériser. Cette nouvelle trajectoire est représentée en trait gras à la figure 9. Elle porte la référence L'100. Plus précisément, en considérant un point d'intersection E entre la courbe de déplacement maximum dmax et l'enveloppe L100, la trajectoire modifiée L'100 longe d'abord la courbe de déplacement maximum dmax puis reprend la trajectoire L100 une fois le point E atteint.

Ainsi, le pulvérisateur n'entre pas en collision avec la pièce et conserve une distance d'application correcte au moins sur la seconde partie du trajet, c'est-à-dire sur la partie démarrant au point critique E. Autrement dit, la trajectoire L'100 suit au mieux la trajectoire idéale L100.

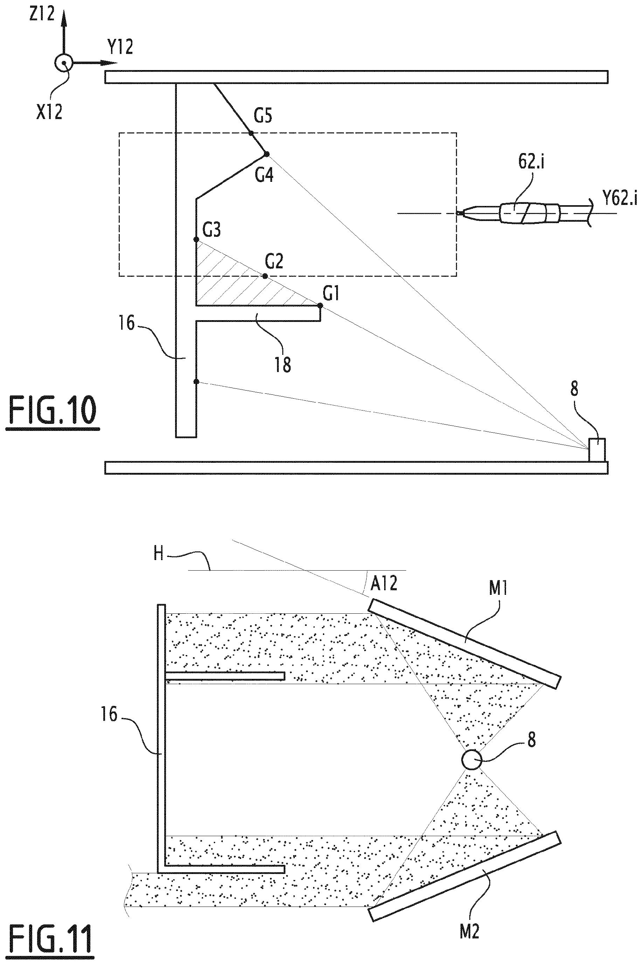

Dans l'exemple de la pièce 16 illustrée à la figure 10, celle-ci présente une forme telle que certaines zones de la pièce ne sont pas accessibles au faisceau laser du capteur 8 ou 10. Ces zones sont couramment appelées zones d'ombre. Ici, il s'agit d'une étagère 18 qui masque une certaine portion de la pièce 16, le volume masqué étant hachuré à la figure 10. Dans ce cas, la ligne de profil extérieure est complétée artificiellement en traçant un segment de droite entre les points successifs pour lesquels le capteur est capable de mesurer la distance. Ces points correspondent donc aux points G1 et G3 à la figure 10. Pour déterminer quels points de la ligne de profil extérieure sont attribués à un pulvérisateur 42.i, avec i compris entre 2 et 7, il convient de faire l'intersection entre le segment de droite tracé artificiellement entre les points G1 et G3 et la limite inférieure du champ d'application du pulvérisateur 42.i, qui est représenté par un rectangle en trait interrompu à la figure 10. L'intersection entre ces deux droites donne le point G2. G2 peut donc être considéré comme un point de mesure « artificiel ». G4 et G5 désignent deux points de la ligne de profil extérieur. G5 est situé à l'intersection de la ligne de profil extérieur avec la limite supérieure du champ d'application du pulvérisateur 42.1. Le tronçon de la ligne de profil extérieure qui est affecté au pulvérisateur 42.i s'étend donc entre les points G2 et G5. La même opération peut être effectuée pour déterminer un point de mesure artificiel sur la limite supérieure du champ de pulvérisation du pulvérisateur considéré.

Pour pallier le traitement délicat des zones d'ombre, il est possible d'utiliser, comme représenté à la figure 11, deux miroirs M1 et M2 disposés respectivement au-dessus et en dessous du capteur laser 8 et/ou 10 pour réfléchir une partie des rayons provenant du ou des capteurs afin d'atteindre les éventuelles zones d'ombres d'une pièce 16 ayant une géométrie particulière. Les capteurs 8 et 10 sont en effet capables d'émettre un faisceau laser sur un secteur angulaire égal à 270° dans un plan vertical. Les miroirs M1 et M2 sont légèrement inclinés par rapport à un plan horizontal H. Plus précisément, chaque miroir M1 ou M2 est incliné, par rapport au plan H, d'un angle A12 compris entre 20° et 70°, de préférence égal à 45°. De plus, les miroirs M1 et M2 sont inclinés, par rapport au plan H, de manière opposée l'un par rapport à l'autre, c'est-à-dire qu'ils sont orientés respectivement vers le haut et vers le bas en direction de la pièce à revêtir 16. Les miroirs M1 et M2 sont donc orientés pour réfléchir les rayons du capteur laser en direction des zones d'ombre. En connaissant la distance entre le capteur 10 et les miroirs M1 et M2 et l'angle d'inclinaison des miroirs, il est possible d'en déduire la distance, mesurée parallèlement à l'axe Y12, entre chaque point de la ligne de profil extérieure et le capteur 10. Cet agencement de miroirs permet donc de s'affranchir du traitement des zones d'ombre décrit ci-dessus.

En variante non représentée, un autre type de capteur peut être utilisé, comme un capteur à ultrason ou un capteur optique, comme une caméra.

Selon une autre variante non représentée, au moins un des pulvérisateurs est apte à effectuer un mouvement combiné vertical et horizontal dans son plan de mobilité, qui est le plan orthogonal à l'axe X12 de déplacement du convoyeur 12. Par exemple, chaque pulvérisateur de ce type peut être monté à l'extrémité du bras d'un robot multiaxes, en particulier un robot six axes ou sur un robot de type réciprocateur, effectuant des mouvements de va-et-vient dans le sens de la hauteur. Dans ce dernier cas, le pulvérisateur reste monté sur un chariot mobile horizontalement en translation. Si le robot est capable de revêtir l'ensemble de la pièce, la ligne de profil extérieur n'est pas tronçonnée et tous les points de la ligne de profil extérieur appartiennent au champ d'application du pulvérisateur. Les robots multiaxes comprennent chacun un bras articulé et effectuent des mouvements de va-et-vient dans le sens de la hauteur et suivent également une trajectoire dans le sens de la profondeur, c'est-à-dire parallèlement à l'axe Y12.

Ces robots ont une vitesse de déplacement bien supérieure à celle du convoyeur 12, par exemple de l'ordre de 1m/s, alors que la vitesse du convoyeur 12 est par exemple de 1 m/min. Le point le plus proche du pulvérisateur dans son champ d'application est actualisé tout au long du déplacement vertical du pulvérisateur par le robot et de l'avancée de la pièce sur le convoyeur. La distance d'application du pulvérisateur est ajustée automatiquement en fonction des coordonnées du point le plus proche. Dans ce cas, la ligne de suivi correspond à une ligne correspondant à des allers-retours dans le sens de la hauteur. Par ailleurs, la trajectoire de consigne des pulvérisateurs aptes à effectuer un mouvement combiné horizontal et vertical est calculée de la manière suivante. On définit une surface de profil extérieur formée par l'ensemble des lignes de profil extérieur. Cette surface est prolongée numériquement par des points de mesure fictifs de part et d'autre dans le sens de la longueur. Puis, une courbe de déplacement en forme de demi-ellipse est affectée à chaque point de mesure réel appartenant aux lignes de profil extérieur et à chaque point de mesure fictif, la distance nominale d'application du pulvérisateur correspondant pour moitié au grand axe de la courbe de déplacement. On détermine ensuite une surface d'enveloppe du nuage de points formé par les points de chaque courbe de déplacement affectée. Les points du nuage sont répartis dans les trois dimensions, c'est pourquoi la surface d'enveloppe est également appelée « mapping 3D ». La trajectoire de consigne est établie à l'intérieur de cette surface d'enveloppe.

Selon une autre variante non représentée, les colonnes de pulvérisateur ne sont pas verticales mais légèrement inclinées par rapport à l'axe vertical Z12.

Selon une autre variante non représentée, les plans de mesure des capteurs 8 et 10 sont perpendiculaires à l'axe de déplacement X12 du convoyeur 12, c'est-à-dire que les angles A8 et A10 sont nuls.

Selon une autre variante non représentée, le convoyeur est un convoyeur au sol, sur lequel les pièces à revêtir reposent.

Selon une autre variante non représentée, l'installation 1 comprend au moins un pulvérisateur coudé, qui est monté à l'extrémité d'un bras de robot et qui est prévu pour revêtir de produit la surface supérieure des pièces convoyées. L'axe de pulvérisation n'est donc pas parallèle à l'axe de déplacement du pulvérisateur. Ce pulvérisateur est apte à effectuer un mouvement combiné horizontal et vertical dans son plan de mobilité, qui est orthogonal à l'axe de déplacement X12 du convoyeur 12. La distance d'application du pulvérisateur est alors aussi ajustée automatiquement en fonction des coordonnées du point le plus proche dans son champ de pulvérisation, grâce à la méthode détaillée ci-dessus.

Selon une autre variante non représentée, le plan de mobilité d'un ou plusieurs pulvérisateurs n'est pas perpendiculaire à l'axe du convoyeur X12, mais oblique par rapport à cet axe. Le plan de mobilité est donc dans ce cas un plan vertical formant avec l'axe X12 un angle, qui est de préférence compris entre 45° et 135°. Cela permet notamment de mieux peindre les faces disposées aux extrémités longitudinales des pièces convoyées, c'est-à-dire les faces avant et arrière perpendiculaires à l'axe du convoyeur X12.

Les caractéristiques techniques des variantes et modes de réalisation envisagés ci-dessus peuvent être combinées entre elles pour générer de nouveaux modes de réalisation de l'invention.

## Revendications

1. Méthode d'application d'un produit de revêtement sur une pièce (13 ; 16) déplacée par un convoyeur (12), le long duquel est disposé au moins un pulvérisateur (42.1-42.8, 62.1-62.8) mobile dans un plan oblique ou perpendiculaire à un axe de déplacement (X12) du convoyeur, cette méthode étant **caractérisée en ce qu'**elle comprend les étapes automatisées suivantes, consistant à :
a) déterminer dans un repère fixe (X12, Y12, Z12), les coordonnées des points (A1, B1, C1, A2, B2, C2) d'une ou plusieurs lignes (L1, L2) de profil extérieur de la pièce réparties sur la longueur de la pièce,
b) attribuer à chaque pulvérisateur les points de chaque ligne de profil extérieur qui se trouvent dans son champ de pulvérisation,
c) parmi les points attribués à chaque pulvérisateur, identifier pour chaque ligne de profil extérieur le point le plus proche (A1, A2 ; B1, B2) du pulvérisateur,
d) déterminer pour chaque pulvérisateur, une ligne de suivi (L3, L4) passant par la projection orthogonale de tous les points les plus proches identifiés à l'étape c) dans un plan passant par un axe du pulvérisateur et parallèle à l'axe de déplacement (X12) du convoyeur,
e) établir une trajectoire de consigne (L100) pour chaque pulvérisateur en fonction des points de la ligne de suivi (L3 , L4) de manière à ajuster automatiquement et indépendamment la distance d'application de chaque pulvérisateur en fonction du profil extérieur de la pièce.

2. Méthode selon la revendication 1, **caractérisée en ce qu'**elle comprend une autre étape consistant à mesurer la position de chaque pièce le long du convoyeur (12) et **en ce que** l'étape a) consiste à déterminer les coordonnées des points (A1, B1, C1, A2, B2, C2) de plusieurs lignes de profil extérieur (L1, L2) réparties à intervalle régulier sur la longueur de la pièce.

3. Méthode selon la revendication 2, **caractérisée en ce qu'**elle comprend une autre étape consistant à piloter chaque pulvérisateur (42.1-42.8, 62.1-62.8) pour projeter le produit de revêtement uniquement si la pièce se trouve dans son champ de pulvérisation.

4. Méthode selon l'une des revendications précédentes, **caractérisée en ce que** chaque ligne de suivi (L3, L4) est prolongée numériquement de part et d'autre par des points de mesure fictifs pour projeter du produit sur les faces avant (E1) et arrière (E2) de la pièce.

5. Méthode selon la revendication 4, **caractérisée en ce que** les points de mesure fictifs sont positionnés sur l'axe du convoyeur (X12) si la face avant (E1) ou arrière (E2) est intersectée par l'axe du convoyeur et sont positionnées axialement dans le prolongement du premier ou du dernier point de la ligne de suivi (L3, L4) si la face avant ou arrière n'est pas intersectée par l'axe du convoyeur.

6. Méthode selon la revendication 5, **caractérisée en ce que** les points de mesure fictifs sont répartis sur un segment parallèle à l'axe du convoyeur (X12), dont la longueur est égale à la largeur du champ de pulvérisation du pulvérisateur (42.1-42.8, 62.1-62.8).

7. Méthode selon l'une des revendications 4 à 6, **caractérisée en ce que** l'étape e) comprend des sous-étapes consistant à :
f) affecter une courbe de déplacement en forme de demi-ellipse à chaque point des lignes de suivi, la distance nominale d'application du pulvérisateur correspondant pour moitié au grand axe de la courbe de déplacement, et
g) déterminer la trajectoire de consigne (L100) en établissant une ligne d'enveloppe du nuage de points formé par les points de chaque courbe de déplacement affectée à l'étape f).

8. Méthode selon l'une des revendications précédentes, **caractérisée en ce que** au moins un des pulvérisateurs est apte à effectuer un mouvement combiné vertical et horizontal dans son plan de mobilité **en ce que** le point le plus proche du pulvérisateur dans son champ d'application est actualisé au cours du déplacement vertical du pulvérisateur et **en ce que** la distance d'application du pulvérisateur est ajustée automatiquement en fonction des coordonnées du point le plus proche.

9. Méthode selon la revendication 8, **caractérisée en ce qu'**une étape de calcul de la trajectoire des pulvérisateurs aptes à effectuer un mouvement combiné I comprend des sous-étapes consistant à :
m) prolonger numériquement une surface de profil extérieur, formée par l'ensemble des lignes de profil extérieur, par des points de mesure fictifs de part et d'autre dans le sens de la longueur,
n) affecter une courbe de déplacement en forme de demi-ellipse à chaque point de mesure réel appartenant aux lignes de profil extérieur et à chaque point de mesure fictif, la distance nominale d'application du pulvérisateur correspondant pour moitié au grand axe de la courbe de déplacement,
p) déterminer une surface d'enveloppe du nuage de points formé par les points de chaque courbe de déplacement affectée à l'étape n), et
q) établir une trajectoire de consigne à l'intérieur de cette surface d'enveloppe.

10. Méthode selon l'une des revendications précédentes, **caractérisée en ce qu'**elle comprend une autre étape consistant à vérifier si chaque pulvérisateur (42.1-42.8, 62.1-62.8) est capable de suivre sa trajectoire (L100), et s'il n'en est pas capable, à établir une nouvelle trajectoire (L'100), qui suit au mieux la trajectoire de consigne ou à reculer au maximum le pulvérisateur pour éviter une collision entre la pièce à revêtir et le pulvérisateur.

11. Installation (1) d'application d'un produit de revêtement sur une pièce (13, 16) déplacée par un convoyeur (12), le long duquel est disposé au moins un pulvérisateur (42.1, 42.8, 62.1, 62.8) mobile dans un plan oblique ou perpendiculaire à un axe (X12) de déplacement du convoyeur, cette installation étant **caractérisée en ce qu'**elle comprend les moyens suivants :
- un premier moyen (8, 10) pour déterminer dans un repère fixe (X12, Y12, Z12), les coordonnées des points (A1, B1, C1, A2, B2, C2) d'une ou plusieurs lignes (L1, L2) de profil extérieur de la pièce, réparties sur la longueur de la pièce,
- un deuxième moyen (100) pour attribuer à chaque pulvérisateur, les points de chaque ligne de profil extérieur qui se trouvent dans son champ de pulvérisation,
- un troisième moyen (100) pour identifier, pour chaque ligne de profil extérieur et parmi les points attribués à chaque pulvérisateur, le point le plus proche du pulvérisateur,
- un quatrième moyen (100) pour déterminer pour chaque pulvérisateur, une ligne de suivi (L3, L4) passant par la projection orthogonale de tous les points les plus proches dans un plan passant par un axe du pulvérisateur et parallèle à l'axe de déplacement (X12) du convoyeur, et
- un cinquième moyen (100) pour établir une trajectoire de consigne (L100) pour chaque pulvérisateur en fonction des points de la ligne de suivi (L3 , L4) de manière à ajuster automatiquement et indépendamment la distance d'application de chaque pulvérisateur en fonction du profil extérieur de la pièce.

12. Installation selon la revendication 11, **caractérisée en ce qu'**elle comprend une colonne de pulvérisateurs (40, 42, 60, 62), disposée d'un côté du convoyeur (12),

13. Installation selon la revendication 11 ou 12, **caractérisée en ce que** le premier moyen inclut un capteur (8, 10), disposé d'un côté du convoyeur (12), en amont du ou des pulvérisateurs

14. Installation selon la revendication 11, **caractérisée en ce qu'**elle comprend au moins deux colonnes de pulvérisateurs (40, 42, 60, 62), qui sont disposées de part et d'autre du convoyeur (12), ces colonnes étant de préférence disposées par paires (4, 6), alors que les colonnes de pulvérisateurs de chaque paire sont disposées côte-à-côte.

15. Installation selon la revendication 11 ou 12, **caractérisée en ce que** le premier moyen inclut deux capteurs (8, 10), qui sont disposés de part et d'autre du convoyeur (12), en amont du ou des pulvérisateurs et qui ont chacun un plan de mesure vertical (P8, P10).

## Patentansprüche

1. Auftragsverfahren eines Beschichtungsproduktes auf ein Werkstück (13; 16), das durch eine Fördereinrichtung (12) bewegt wird, entlang welcher wenigstens ein Zerstäuber (42.1-42.8, 62.1-62.8) angeordnet ist, der in einer schräg oder senkrecht zu einer Bewegungsachse (X12) der Fördereinrichtung verlaufenden Ebene beweglich ist, wobei das Verfahren **dadurch gekennzeichnet ist, dass** es die folgenden automatisierten Schritte umfasst, die darin bestehen:
a) in einem festen Bezugssystem (X12, Y12, Z12) die Koordinaten der Punkte (A1, B1, C1, A2, B2, C2) einer oder mehrerer äußerer Profillinien (L1, L2) des Werkstücks, die über die Länge des Werkstücks verteilt sind, zu bestimmen,
b) jedem Zerstäuber die Punkte jeder äußeren Profillinie zuzuordnen, die sich in seinem Zerstäubungsfeld befinden,
c) unter den jedem Zerstäuber zugeordneten Punkten für jede äußere Profillinie den nächstgelegenen Punkt (A1, A2; B1, B2) des Zerstäubers zu identifizieren,
d) für jeden Zerstäuber eine Nachverfolgungslinie (L3, L4) zu bestimmen, die durch die orthogonale Projektion aller nächstgelegenen Punkte, die in Schritt c) identifiziert wurden, in einer Ebene verläuft, die durch eine Achse des Zerstäubers läuft und parallel zur Bewegungsachse (X12) der Fördereinrichtung verläuft,
e) für jeden Zerstäuber eine Sollbahn (L100) abhängig von den Punkten der Nachverfolgungslinie (L3, L4) zu bilden, um automatisch und unabhängig den Auftragsabstand jedes Zerstäubers als Funktion des äußeren Profils des Werkstücks anzupassen.

2. Verfahren nach Anspruch 1, **dadurch gekennzeichnet, dass** es einen weiteren Schritt umfasst, der darin besteht, die Position jedes Werkstücks entlang der Fördereinrichtung (12) zu messen, und dass der Schritt a) darin besteht, die Koordinaten der Punkte (A1, B1, C1, A2, B2, C2) mehrerer äußerer Profillinien (L1, L2), die in regelmäßigem Abstand über die Länge des Werkstücks verteilt sind, zu bestimmen.

3. Verfahren nach Anspruch 2, **dadurch gekennzeichnet, dass** es einen weiteren Schritt umfasst, der darin besteht, jeden Zerstäuber (42.1-42.8, 62.1-62.8) so anzusteuern, dass er das Beschichtungsprodukt nur dann ausstößt, wenn sich das Werkstück in seinem Zerstäubungsfeld befindet.

4. Verfahren nach einem der vorhergehenden Ansprüche, **dadurch gekennzeichnet, dass** jede Nachverfolgungslinie (L3, L4) an beiden Enden durch fiktive Messpunkte digital verlängert wird, um das Produkt auf die Vorderseite (E1) und die Rückseite (E2) des Werkstücks auszustoßen.

5. Verfahren nach Anspruch 4, **dadurch gekennzeichnet, dass** die fiktiven Messpunkte auf der Achse der Fördereinrichtung (X12) angeordnet sind, wenn die Vorderseite (E1) oder Rückseite (E2) von der Achse der Fördereinrichtung geschnitten wird, und axial in der Verlängerung des ersten oder des letzten Punktes der Nachverfolgungslinie (L3, L4) angeordnet sind, wenn die Vorderseite oder die Rückseite nicht von der Achse der Fördereinrichtung geschnitten wird.

6. Verfahren nach Anspruch 5, **dadurch gekennzeichnet, dass** die fiktiven Messpunkte auf einem parallel zur Achse der Fördereinrichtung (X12) verlaufenden Segment verteilt sind, dessen Länge gleich der Breite des Zerstäubungsfeldes des Zerstäubers (42.1-42.8, 62.1-62.8) ist.

7. Verfahren nach einem der Ansprüche 4 bis 6, **dadurch gekennzeichnet, dass** der Schritt e) Teilschritte umfasst, die darin bestehen:
f) jedem Punkt der Nachverfolgungslinien eine Bewegungskurve in Form einer Halbellipse zuzuweisen, wobei der Soll-Auftragsabstand des Zerstäubers zur Hälfte der Hauptachse der Bewegungskurve entspricht, und
g) die Sollbahn (L100) zu bestimmen, indem eine Mantellinie der Punktwolke, die durch die Punkte jeder im Schritt f) zugewiesenen Bewegungskurve gebildet ist, erzeugt wird.

8. Verfahren nach einem der vorhergehenden Ansprüche, **dadurch gekennzeichnet, dass** wenigstens einer der Zerstäuber in der Lage ist, eine kombinierte vertikale und horizontale Bewegung in seiner Bewegungsebene auszuführen, indem der nächstgelegene Punkt des Zerstäubers in seinem Auftragsfeld im Laufe der vertikalen Bewegung des Zerstäubers aktualisiert wird und indem der Auftragsabstand des Zerstäubers abhängig von den Koordinaten des nächstgelegenen Punktes automatisch angepasst wird.

9. Verfahren nach Anspruch 8, **dadurch gekennzeichnet, dass** ein Schritt zur Berechnung der Bahn der Zerstäuber, die in der Lage sind, eine kombinierte Bewegung auszuführen, Teilschritte umfasst, die darin bestehen:
m) eine äußere Profilfläche, die durch die Gesamtheit der äußeren Profillinien gebildet wird, durch fiktive Messpunkte an beiden Enden in Längsrichtung digital zu verlängern,
n) jedem realen Messpunkt, der zu den äußeren Profillinien gehört, und jedem fiktiven Messpunkt eine Bewegungskurve in Form einer Halbellipse zuzuweisen, wobei der Soll-Auftragsabstand des Zerstäubers zur Hälfte der Hauptachse der Bewegungskurve entspricht,
p) eine Mantelfläche der Punktwolke, die durch die Punkte jeder im Schritt n) zugewiesenen Bewegungskurve gebildet ist, zu bestimmen, und
q) eine Sollbahn innerhalb dieser Mantelfläche zu erzeugen.

10. Verfahren nach einem der vorhergehenden Ansprüche, **dadurch gekennzeichnet, dass** es einen weiteren Schritt umfasst, der darin besteht, zu überprüfen, ob jeder Zerstäuber (42.1-42.8, 62.1 -62.8) in der Lage ist, seiner Bahn (L100) zu folgen, und wenn er dazu nicht in der Lage ist, eine neue Bahn (L100) festzulegen, die der Sollbahn am besten folgt, oder den Zerstäuber maximal zurückzuziehen, um eine Kollision zwischen dem zu beschichtenden Werkstück und dem Zerstäuber zu verhindern.

11. Anlage (1) zum Auftrag eines Beschichtungsproduktes auf ein Werkstück (13; 16), das durch eine Fördereinrichtung (12) bewegt wird, entlang welcher wenigstens ein Zerstäuber (42.1-42.8, 62.1-62.8) angeordnet ist, der in einer schräg oder senkrecht zu einer Bewegungsachse (X12) der Fördereinrichtung verlaufenden Ebene beweglich ist, wobei diese Anlage **dadurch gekennzeichnet ist, dass** sie die folgenden Mittel umfasst:
- ein erstes Mittel (8, 10), um in einem festen Bezugssystem (X12, Y12, Z12) die Koordinaten der Punkte (A1, B1, C1, A2, B2, C2) einer oder mehrerer Linien (L1, L2) des äußeren Profils des Werkstücks, die über die Länge des Werkstücks verteilt sind, zu bestimmen,
- ein zweites Mittel (100), um jedem Zerstäuber die Punkte jeder äußeren Profillinie zuzuordnen, die sich in seinem Zerstäubungsfeld befinden,
- ein drittes Mittel (100), um für jede äußere Profillinie und unter den jedem Zerstäuber zugeordneten Punkten den nächstgelegenen Punkt des Zerstäubers zu identifizieren,
- ein viertes Mittel (100), um für jeden Zerstäuber eine Nachverfolgungslinie (L3, L4) zu bestimmen, die durch die orthogonale Projektion aller nächstgelegenen Punkte in einer Ebene verläuft, die durch eine Achse des Zerstäubers läuft und parallel zur Bewegungsachse (X12) der Fördereinrichtung verläuft, und
- ein fünftes Mittel (100), um für jeden Zerstäuber eine Sollbahn (L100) abhängig von den Punkten der Nachverfolgungslinie (L3, L4) zu bilden, um automatisch und unabhängig den Auftragsabstand jedes Zerstäubers als Funktion des äußeren Profils des Werkstücks anzupassen.

12. Anlage nach Anspruch 11, **dadurch gekennzeichnet, dass** sie eine Reihe von Zerstäubern (40, 42, 60, 62) umfasst, die auf einer Seite der Fördereinrichtung (12) angeordnet ist.

13. Anlage nach Anspruch 11 oder 12, **dadurch gekennzeichnet, dass** das erste Mittel einen Sensor (8, 10) umfasst, der auf einer Seite der Fördereinrichtung (12), stromaufwärts des oder der Zerstäuber, angeordnet ist.

14. Anlage nach Anspruch 11, **dadurch gekennzeichnet, dass** sie wenigstens zwei Reihen von Zerstäubern (40, 42, 60, 62) umfasst, die zu beiden Seiten der Fördereinrichtung (12) angeordnet sind, wobei diese Reihen vorzugsweise in Paaren (4, 6) angeordnet sind, während die Reihen von Zerstäubern jedes Paares nebeneinander angeordnet sind.

15. Anlage nach Anspruch 11 oder 12, **dadurch gekennzeichnet, dass** das erste Mittel zwei Sensoren (8, 10) umfasst, die zu beiden Seiten der Fördereinrichtung (12), stromaufwärts des oder der Zerstäuber, angeordnet sind und jeweils eine vertikale Messebene (P8, P10) aufweisen.

## Claims

1. A coating application method for applying a coating product on a component piece (13; 16) moved by a conveyor (12), along which is arranged at least one sprayer (42.1-42.8, 62.1-62.8) that is movable in a plane that is oblique or perpendicular to an axis of movement (X12) of the conveyor, this method being **characterised in that** it includes the following automated steps consisting of:
a) determining in a fixed coordinate system (X12, Y12, Z12), the coordinates of the points (A1, B1, C1, A2, B2, 02) of one or more external profile lines (L1, L2) of the component piece distributed over the length of the component piece;
b) assigning to each sprayer the points of each exterior profile line that are found to be in its spraying field (range);
c) among the points assigned to each sprayer, identifying for each exterior profile line the point (A1, A2, B1, B2) that is nearest to the sprayer;
d) determining for each sprayer, a tracking line (L3, L4) that passes through the orthogonal projection of all the nearest points identified in the step c) in a plane passing through an axis of the sprayer and parallel to the axis of movement (X12) of the conveyor,
e) establishing a set point trajectory (L100) for each sprayer on the basis of the points of the tracking line (L3, L4) in a manner so as to adjust automatically and independently the application distance of each sprayer according to the exterior profile of the component piece..

2. A method according to claim 1, **characterised in that** it includes a further step consisting of measuring the position of each component piece along the conveyor (12) and **in that** step a) consists in determining the coordinates of the points (A1, B1, 01, A2, B2, 02) of a plurality of exterior profile lines (L1, L2) distributed at regular intervals over the length of the component piece.

3. A method according to claim 2, **characterised in that** it includes a further step consisting of controlling each sprayer (42.1-42.8, 62.1-62.8) in order for spraying the coating product only if the component piece is found to be in its spraying field.

4. A method according to one of the preceding claims, **characterised in that** each tracking line (L3, L4) is extended digitally on either side by fictitious measurement points for spraying the product on the front surface (E1) and rear surface (E2) of the component piece.

5. A method according to claim 4, **characterised in that** the fictitious measurement points are positioned on the axis of the conveyor (X12) if the front surface (E1) or rear surface (E2) is intersected by the axis of the conveyor and are positioned axially in the extension of (in line with) the first or last point of the tracking line (L3, L4) if the front or rear surface is not intersected by the axis of the conveyor.

6. A method according to claim 5, **characterised in that** the fictitious measurement points are distributed over a segment that is parallel to the axis of the conveyor (X12), whose length is equal to the width of the spraying field of the sprayer (42.1-42.8, 62.1-62.8).

7. A method according to one of claims 4 to 6, **characterised in that** the step e) comprises the sub-steps consisting of:
f) assigning a displacement curve in the shape of a semi-ellipse to each point of the tracking lines, the nominal application distance of the sprayer corresponding to half the major axis of the displacement curve;
g) determining the set point trajectory (L100) by establishing an envelope-surface line of the point cloud formed by the points of each displacement curve assigned in the step f).

8. A method according to one of the preceding claims, **characterised in that** at least one of the sprayers is capable of performing a combined vertical and horizontal movement in its displacement plane, **in that** the point that is nearest to the sprayer within its field of application is updated over the course of the vertical movement of the sprayer and **in that** the application distance of the sprayer is automatically adjusted based on the coordinates of the nearest point.

9. A method according to claim 8, **characterised in that** a calculation step for calculating the trajectory of the sprayers that are capable of performing a combined movement I comprises sub-steps consisting of:
m) digitally extending an exterior profile surface, formed by all the exterior profile lines, by fictitious measurement points on both sides in the lengthwise direction;
n) assigning a displacement curve in the shape of a semi-ellipse to each real measurement point belonging to the exterior profile lines and to each fictitious measurement point, the nominal application distance of the sprayer corresponding to half the major axis of the displacement curve;
p) determining a peripheral envelope surface of the point cloud formed by the points of each displacement curve assigned in the step n); and
q) establishing a set point trajectory within the interior of this peripheral envelope surface.

10. A method according to one of the preceding claims, **characterised in that** it includes a further step consisting of: checking to verify whether each sprayer (42.1-42.8, 62.1-62.8) is capable of following its trajectory (L100); and if it is not capable thereof, establishing a new trajectory (L100), which best follows the set point trajectory, or moving back to the maximum extent the sprayer in order to avoid a collision between the component piece to be coated and the sprayer.

11. A coating application installation (1) for applying a coating product on a component piece (13, 16) moved by a conveyor (12), along which is arranged at least one sprayer (42.1, 42.8, 62.1, 62.8) that is movable in a plane that is oblique or perpendicular to an axis (X12) of movement of the conveyor, this installation being **characterised in that** it comprises the following means:
- a first means (8, 10) for determining in a fixed coordinate system (X12, Y12, Z12), the coordinates of the points (A1, B1, C1, A2, B2, C2) of one or more exterior profile lines (L1, L2) of the component piece, distributed over the length of the component piece;
- a second means (100) for assigning each sprayer, the points of each exterior profile line which are in its spraying field,
- a third means (100) for identifying, for each exterior profile line and among the points assigned to each sprayer, the point that is nearest to the sprayer;
- a fourth means (100) for determining for each sprayer, a tracking line (L3, L4) that passes through the orthogonal projection of all the nearest points in a plane passing through an axis of the sprayer and parallel to the axis of movement (X12) of the conveyor; and
- a fifth means (100) for establishing a set point trajectory (L100) for each sprayer on the basis of the points of the tracking line (L3, L4) in a manner so as to adjust automatically and independently the application distance of each sprayer according to the exterior profile of the component piece.

12. An installation according to claim 11, **characterised in that** it comprises a column of sprayers (40, 42, 60, 62), arranged on one side of the conveyor (12).

13. An installation according to claim 11 or 12, **characterised in that** the first means includes a sensor (8, 10), disposed on one side of the conveyor (12), upstream of the one or more sprayers.

14. An installation according to claim 11, **characterised in that** it comprises at least two columns of sprayers (40, 42, 60, 62), which are arranged on either side of the conveyor (12), these columns preferably being arranged in pairs (4, 6), while the columns of sprayers of each pair are arranged side-by-side.

15. An installation according to claim 11 or 12, **characterised in that** the first means includes two sensors (8, 10), which are arranged on either side of the conveyor (12), upstream of the one or more sprayers and which each have a vertical measurement plane (P8, P10).
